# EUROPÄISCHE PATENTANMELDUNG

(11) **EP 2 950 508 A2**
(43) Veröffentlichungstag der Anmeldung: **02.12.2015**
(21) Anmeldenummer: 15166767.2
(22) Anmeldetag: 07.05.2015
(51) Int. Cl.: H04L 29/08, H04L 29/06

(54) **HEIZUNGSSTEUERGERÄT**

(30) Priorität: 28.05.2014 DE 102014210160
(71) Anmelder: ROBERT BOSCH GMBH, 70442 Stuttgart (DE)
(72) Erfinder: Zecher, Stefan, 35460 Staufenberg (DE); Skiera, Daniel, 35428 Langgoens (DE); Boucsein, Dierk, 35287 Amoeneburg-Ruedigheim (DE); Arndt, Michael, 35396 Giessen (DE); Ullmann, Stefan, 70825 Korntal-Muenchingen (DE); Hoetzel, Juergen, 61197 Florstadt (DE)

(57) **Zusammenfassung**

Die Erfindung betrifft ein Verfahren zum Betreiben einer Heizungsanlage (1), einen Server (9) und ein Heizungssteuergerät (2) für eine Heizungsanlage, mit einer Schnittstelle (3), wobei die Schnittstelle ausgebildet ist, um Daten von einem Übertragungsprotokoll des Heizungssteuergerätes in ein Übertragungsprotokoll eines weiteren Gerätes (9) umzuwandeln und die Daten an das weitere Gerät zu übermitteln.

## Beschreibung

Die Erfindung betrifft ein Heizungssteuergerät gemäß Patentanspruch 1, einen Server gemäß Patentanspruch 15 und ein Verfahren zum Austauschen von Daten gemäß Patentanspruch 18.

### Stand der Technik

Im Stand der Technik ist es bekannt, ein Heizungssteuergerät mit einer Schnittstelle zu versehen, über die Daten übermittelt werden können.

### Offenbarung der Erfindung

Die Aufgabe der Erfindung besteht darin, ein verbessertes Heizungssteuergerät, einen verbesserten Server und ein verbessertes Verfahren bereitzustellen.

Die Aufgabe der Erfindung wird durch das Heizungssteuergerät gemäß Patentanspruch 1, den Server gemäß Patentanspruch 15 und das Verfahren gemäß Patentanspruch 18 gelöst.

Ein Vorteil des beschriebenen Heizungsgeräts besteht darin, dass Daten in ein anderes Übertragungsprotokoll umgewandelt werden können. Dadurch ist es möglich, dass das Heizungssteuergerät Daten an weitere Geräte, insbesondere Steuergeräten, Recheneinheiten, Servern beispielsweise über das Internet oder eine Ethernet-Verbindung übertragen und ausgetauscht werden. Dies wird dadurch erreicht, dass eine Schnittstelle vorgesehen ist, mit der die Daten des Heizungssteuergerätes in ein anderes Übertragungsprotokoll eines weiteren Gerätes, insbesondere eines Datenbusses umgewandelt werden können.

In einer weiteren Ausführungsform werden nur die Daten übertragen, die sich geändert haben. Auf diese Weise wird eine Reduzierung des Datenverkehrs erreicht. Somit kann auf der Seite des Gerätes ein Abbild der Daten der Komponenten und/oder der Heizungssteuergeräte vorliegen, wobei nicht bei jeder Übertragung von Daten alle Daten übertragen werden müssen.

In einer weiteren Ausführungsform werden die übertragenen Daten mit einem Zeitstempel versehen. Auf diese Weise ist es möglich, die Daten zeitlich zu sortieren und auszuwerten. Weiterhin bietet diese Ausführungsform den Vorteil, dass die Übertragung der Daten nicht in Echtzeit, sondern zu bestimmten Zeitpunkten erfolgen kann. Dies ist insbesondere dann von Vorteil, wenn die Datenverbindung zu dem weiteren Gerät nicht immer zur Verfügung steht.

In einer weiteren Ausführungsform werden die geänderten Daten zwischengespeichert und zu vorgegebenen Zeitpunkten übertragen. Diese Vorgehensweise bietet den Vorteil, dass nicht eine ständige Datenverbindung zu dem weiteren Gerät vorhanden sein muss. Die Daten werden dann übertragen, wenn die Datenverbindung vorliegt.

In einer weiteren Ausführungsform werden zusätzlich zu den Daten Steuerdaten übertragen. Damit wird eine effiziente Ausnutzung der Datenverbindung erreicht.

In einer weiteren Ausführungsform ist das Heizungssteuergerät mit mehreren Komponenten der Heizungsanlage verbunden. Die Daten der Komponenten werden mit Kennungen für die Komponenten übertragen. Somit ist eine eindeutige Zuordnung der Daten zu einzelnen Komponenten der Heizungsanlage möglich. Dadurch kann eine Auswertung in Bezug auf eine korrekte Funktionsweise der Komponenten ausgeführt werden.

In einer weiteren Ausführungsform ist die Schnittstelle ausgebildet, um sich automatisch an ein Übertragungsprotokoll insbesondere eines Datenbusses anzupassen. Dadurch wird eine erhöhte Flexibilität bei der Verwendung der Schnittstelle erreicht.

In einer weiteren Ausführungsform ist die Schnittstelle mit einem Datenspeicher verbunden, wobei im Datenspeicher Daten und/oder Programme abgelegt sind, mit denen eine Anpassung der Schnittstelle an das Übertragungsprotokoll des Datenbusses möglich ist. Somit ist es nicht erforderlich, dass die Schnittstelle eine Datenverbindung zu einem weiteren Gerät beispielsweise über das Internet aufbaut.

In einer weiteren Ausführungsform ist die Schnittstelle ausgebildet, um sich mit einer Datenquelle beispielsweise über eine Internetverbindung zu verbinden, und um Informationen zum Verbinden mit dem Übertragungsprotokoll des Datenbusses von der Datenquelle zu holen. Auf diese Weise ist eine erhöhte Flexibilität bei der Verwendung der Schnittstelle gegeben. Dadurch kann sich die Schnittstelle flexibel auf sich ändernde Datenbusprotokolle anpassen.

In einer weiteren Ausführungsform ist die Schnittstelle ausgebildet, um eine Datenverbindung mit einer Datenquelle, insbesondere über eine Internetverbindung aufzubauen, um ein automatisches Programmupdate auszuführen. Somit wird eine laufende Aktualisierung der Programme der Schnittstelle gewährleistet.

In einer weiteren Ausführungsform ist das Heizungssteuergerät mit einem Datenspeicher verbunden, wobei der Datenspeicher in zwei Bereiche unterteilt ist. Der erste Bereich ist vorgesehen, um ein Programm abzuspeichern, das vom Heizungssteuergerät verwendet wird. Der zweite Bereich ist vorgesehen, um eine neue Version des Programmes abzuspeichern. Das Heizungssteuergerät ist ausgebildet, um zwischen den Programmen der zwei Bereiche hin- und herzuschalten. Somit kann der erste Bereich verwendet werden, um das Programm zu verwenden, wobei im zweiten Bereich parallel eine neue Version des Programmes abgespeichert wird. Nach der vollständigen Abspeicherung des neuen Programmes schaltet das Heizungssteuergerät auf das Programm des zweiten Bereiches um.

In einer weiteren Ausführungsform ist die Schnittstelle ausgebildet, um über einen M-Bus eine Verbindung mit einer Komponente einer Heizungsanlage aufzubauen. Insbesondere kann über den M-Bus eine Datenverbindung mit einem zentralen Server aufgebaut werden. Beispielsweise kann die Datenverbindung über den M-Bus verwendet werden, um einen Energieverbrauch der Heizungsanlage zu steuern und/oder zu reduzieren.

Abhängig von der gewählten Ausführungsform ist das Gerät in Form einer Heizungskomponente wie z.B. in Form eines Thermostatventils oder in Form einer Eingabe-/Ausgabeeinheit ausgebildet. Es können jedoch auch weitere und/oder andere Komponenten der Heizungsanlage oder des Heizungssystems über die Schnittstelle mit dem Heizungssteuergerät in Verbindung stehen.

Weiterhin wird ein Server vorgeschlagen, der ausgebildet ist, um die Daten von einem Heizungssteuergerät zu empfangen, wobei der Server ausgebildet ist, um Daten von mehreren Heizungssteuergeräten zu sammeln. Auf diese Weise ist es möglich, dass ein Server mehrere Heizungssteuergeräte überwacht bzw. Daten von Komponenten von Heizungsanlagen sammelt.

Der Server ist ausgebildet, um für mehrere Komponenten einer Heizungsanlage Daten zu sammeln, wobei die Daten vorzugsweise in Form von geänderten Daten gegenüber einem vorherigen Zustand empfangen und abgespeichert werden.

In einer weiteren Ausführungsform weist der Server eine Auflistung der Daten mit Kennungen für die jeweilige Komponente auf. Auf diese Weise kann eine Analyse der Daten in Bezug auf die Komponenten erfolgen. Beispielsweise kann eine korrekte Funktionsweise der Komponenten bzw. eine Fehlfunktion der Komponenten überprüft werden. Zudem kann anhand der Daten und/oder anhand der Kennungen ermittelt werden, welche Heizungsanlage tatsächlich welche Komponente aufweist. Dies bietet Vorteile für die Wartung und Reparatur der Heizungsanlagen.

In einer Ausführungsform werden die Daten drahtlos übertragen. Dadurch ist eine erhöhte Flexibilität beim Datenaustausch gegeben.

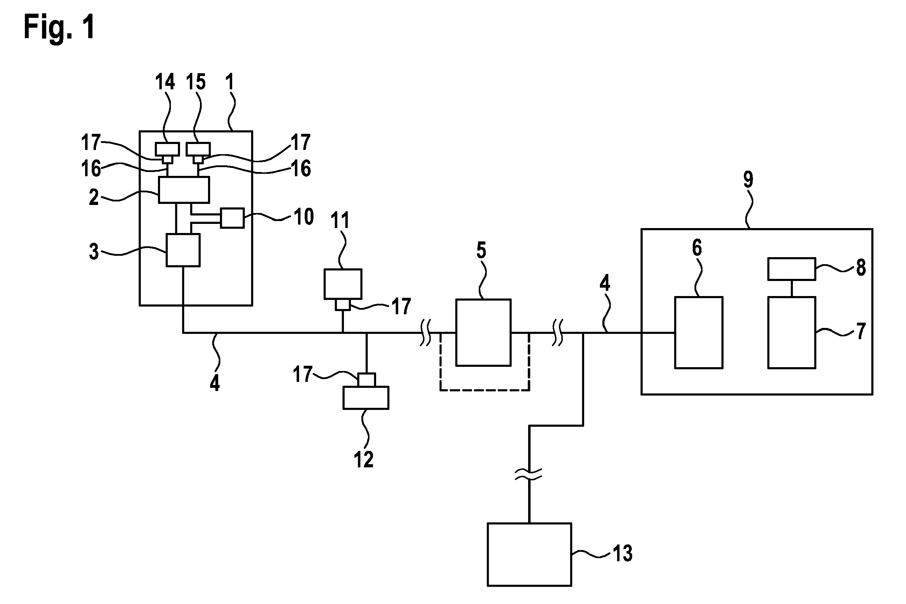

Die Erfindung wird im Folgenden anhand der Figur näher erläutert.

Die Figur zeigt in einer schematischen Darstellung ein System mit einem Server und zwei Heizungsanlagen.

Die Fig. zeigt in einer schematischen Darstellung einen Server 9, der über eine Datenverbindung 4 mit zwei Heizungsanlagen 1, 13 verbunden ist. Abhängig von der gewählten Ausführungsform kann der Server 9 mit nur einer Heizungsanlage 1 oder mit mehreren Heizungsanlagen verbunden sein. Die Heizungsanlagen 1, 3 können identisch aufgebaut sein oder auch Unterschiede im Aufbau aufweisen. Zudem können die Heizungsanlagen 1, 13 sich in der Art der Steuerung und/oder in der Art der Wärmeerzeugung unterscheiden.

Die Heizungsanlage 1 ist beispielsweise als Warmwasserboiler ausgebildet. Die Heizungsanlage 1 weist ein Steuergerät 2 auf, das vorgesehen ist, um beispielsweise eine erste Komponente 14 in Form eines Brenners abhängig von vorgegebenen Steuerdaten anzusteuern. Weiterhin ist das Steuergerät 2 mit einer zweiten Komponente 15, beispielsweise einem Temperatursensor verbunden, der beispielsweise eine Temperatur des Wasserspeichers des Warmwasserboilers erfasst. Das Steuergerät 2 berücksichtigt bei der Ansteuerung des Brenners 14 die Temperatur des Wasserspeichers. Zudem erfasst das Steuergerät 2 über Datenleitungen 16 Daten der ersten und zweiten Komponente 14, 15.

Das Steuergerät 2 ist mit einer ersten Schnittstelle 3 verbunden. Die erste Schnittstelle 3 kann beispielsweise in Form eines Gateways ausgebildet sein. Die erste Schnittstelle 3 steht über eine Datenverbindung 4 entweder direkt oder indirekt, beispielsweise über einen Hub 5 mit dem Server 9 in Verbindung. Zudem kann die erste Schnittstelle 3 über die Datenverbindung 4 mit weiteren Komponenten, wie z.B. einem Thermostatventil 11 und/oder einer Eingabe-/Ausgabeeinheit 12 verbunden sein. Abhängig von der gewählten Ausführungsform kann das Steuergerät 2 auch direkt mit dem Thermostatventil 11 und/oder der Eingabe-/Ausgabeeinheit 12 verbunden sein. Das Thermostatventil ist z.B. vorgesehen, um einen Durchfluss durch einen Heizkörper einzustellen. Die Eingabe-/Ausgabeeinheit 12 ist vorgesehen, damit eine Bedienperson die Heizanlage 1 steuern kann. Beispielsweise kann über die Eingabe-/Ausgabeeinheit 12 ein Steuerprogramm ausgewählt werden, das von dem Steuergerät 2 verwendet wird. Zudem können Grenzwerte für die Wassertemperatur oder Zeiträume festgelegt werden, zu denen welche Heizleistung von der Heizungsanlage 1 zur Verfügung gestellt werden soll. Zudem können Informationen über die Heizanlage 1 auf über die Eingabe-/Ausgabeeinheit 12 an den Benutzer z.B. optisch oder akustisch ausgegeben werden.

Der Server 9 weist eine zweite Schnittstelle 6 auf, die die Datenverbindung mit der ersten Schnittstelle 3 aufbaut. Die zweite Schnittstelle 6 steht mit einer Recheneinheit 7 des Servers 9 in Verbindung. Die Recheneinheit 7 steht zudem mit einem zweiten Datenspeicher 8 in Verbindung. In analoger Weise steht die zweite Schnittstelle 6 des Servers 9 auch über die Datenverbindung 4 mit einer nicht gezeigten Schnittstelle der weiteren Heizungsanlage 13 in Verbindung.

Die erste Schnittstelle 3 ist ausgebildet, um die von dem Steuergerät 2 empfangenen Daten und/oder Daten des Steuergerätes 2 in ein Übertragungsprotokoll umzusetzen, das eine Datenverbindung 4 zum Server 9 ermöglicht. Die Datenverbindung 4 kann drahtlos oder drahtgebunden ausgeführt sein. Insbesondere kann die Datenverbindung über Ethernet und über das Internet erfolgen. Abhängig von der gewählten Ausführungsform kann zwischen dem Steuergerät 2 und der ersten Schnittstelle 3 ein erstes Übertragungsprotokoll, beispielsweise ein EMS-Bus verwendet werden. Die erste Schnittstelle 3 steht beispielsweise über eine Ethernetverbindung oder ein Funknetz z.B. ZigBee und eine Ethernetverbindung über den Hub 5 und das Internet mit dem Server 9 in Verbindung. Abhängig von der gewählten Ausführungsform können jedoch auch andere Datenprotokolle und Übertragungsprotokolle verwendet werden. Insbesondere kann auf den Hub 5 verzichtet werden. Für eine drahtlose Datenverbindung kann beispielsweise ZigBee oder WiFi verwendet werden.

Das Steuergerät 2 erfasst in festgelegten Zeitabständen oder in zufällig gewählten Zeitabständen eigene Daten und Daten der Komponenten 11,12, 14, 15. Diese Daten können Zustände und/oder gemessene Parameter des Steuergerätes 2 und der Komponenten 14,15 bzw. der Eingabe-/Ausgabeeinheit 12 und des Thermostatventils 11 darstellen. Die Daten werden vom Steuergerät 2 im ersten Datenspeicher 10 abgespeichert. Zudem wird zu den Daten jeweils eine Kennung mitabgespeichert, die die Komponente oder das Steuergerät kennzeichnet, von denen die Daten stammen. Weiterhin wird vorzugsweise vom Steuergerät 2 ein Datentyp für jedes Datum erzeugt, das angibt, um welche Daten es sich handelt. Die Daten und die Kennung für die jeweilige Komponente und vorzugsweise der Datentyp der Daten wird über die erste Schnittstelle 3 an den Server 9 übertragen.

In einer Ausführungsform übermittelt die erste Schnittstelle 3 nur einmalig alle Daten einer Komponente vorzugsweise mit Datentyp an den Server 9. Im Folgenden werden nur geänderte Daten mit den Kennungen und vorzugsweise mit den Datentypen an den Server 9 übertragen. Diese Vorgehensweise bietet den Vorteil, dass Daten, die sich nicht ändern, nicht übertragen werden. Dadurch wird das Datenaufkommen zwischen der Heizungsanlage 1 und dem Server 9 reduziert.

In einer Ausführungsform werden die Daten mit den Kennungen von der ersten Schnittstelle oder vom Steuergerät 2 zusätzlich mit einem Zeitstempel versehen und übertragen. Der Zeitstempel kann eine absolute Zeit oder eine relative Zeit angeben. Die absolute Zeit bietet den Vorteil, dass Daten verschiedener Heizungsanlagen miteinander besser verglichen werden können. Für eine Auswertung von Daten nur einer Heizungsanlage ist eine relative Zeitangabe ausreichend. Der Zeitstempel kann festlegen, wann die Daten vom Steuergerät 2 erfasst wurden und/oder wann die Daten von der ersten Schnittstelle 3 an den Server 9 übertragen wurden. Zudem kann der Zeitstempel auch einfach eine zeitliche Abfolge der Daten angeben, indem die Daten beispielsweise in einem seriellen Datenspeicher eingeschrieben werden.

Die erste Schnittstelle 3 kann ausgebildet sein, um die Daten über ein Netzwerkprotokoll an den Hub 5 zu übermitteln. Der Hub 5 kann ausgebildet sein, um die empfangenen Daten auf ein weiteres Protokoll, beispielsweise auf ein Ethernetprotokoll zur Übertragung über das Internet umzuwandeln. Die zweite Schnittstelle 6 ist ausgebildet, um die Daten der Heizungsanlage zu empfangen und um die Daten an die Recheneinheit 7 oder direkt an den zweiten Datenspeicher 8 weiterzuleiten. Die empfangenen Daten werden mit den Kennungen und vorzugsweise mit den Zeitstempeln und vorzugsweise mit den Datentypen im zweiten Datenspeicher 8 abgelegt.

Beispielsweise kann der Datentyp angeben, um welches Datum einer Komponente es sich handelt. Beispielsweise kann als Datum für das Steuergerät angegeben sein, in welchem Betriebsmodus sich das Steuergerät befindet. Als Betriebsmodus kann beispielsweise eine normale Funktion, eine Ruhefunktion oder eine Fehlfunktion vorgesehen sein. Zudem kann der Datentyp beispielsweise für einen Brenner angeben, in welcher Betriebsweise sich der Brenner befindet oder welche Einstellwerte der Brenner beispielsweise für einen Durchfluss von Brennstoff eingestellt hat. Durch die Verwendung des Datentypen können für eine Komponente der Heizungsanlage mehrere Daten erfasst und getrennt ausgewertet werden.

Im zweiten Datenspeicher 8 kann für mehrere oder alle Komponenten der Heizungsanlage, insbesondere des Steuergerätes, ein Abbild (Fingerprint) in Bezug auf wesentliche Datentypen mit den entsprechenden Daten abgelegt sein. Vorzugsweise werden die Daten für mehrere Zeitpunkte, d.h. für einen längeren Zeitraum im zweiten Datenspeicher 8 abgespeichert. Damit ist es möglich, zeitliche Änderungen der Daten einer Komponente über eine zeitliche Veränderung zu analysieren. Dadurch kann beispielsweise eine Fehlfunktion überprüft werden. Werden von der ersten Schnittstelle 3 immer alle Daten und nicht nur die geänderten Daten übertragen, so können in den zweiten Datenspeicher 8 immer alle Daten und nicht nur die geänderten Daten mit den entsprechenden Zeitstempeln, Datentypen und Komponentenkennungen abgespeichert werden.

Werden von der ersten Schnittstelle 3 nur die sich ändernden Daten übertragen, so können abhängig von der gewählten Ausführungsform entweder nur die geänderten Daten vorzugsweise mit den Datentypen, den Zeitstempeln und den Komponentenkennungen im zweiten Datenspeicher 8 abgespeichert werden oder zusätzlich aufgrund der vorliegenden bisher gespeicherten Daten für jeden Zeitstempel ein Abbild der vorliegenden Daten der Datentypen der Komponenten der Heizungsanlage erstellt und abgespeichert werden.

Abhängig von der gewählten Ausführungsform ist die erste Schnittstelle 3 oder das Steuergerät 2 ausgebildet, um Daten der Komponenten und des Steuergerätes zwischenzuspeichern und nach einer Zwischenspeicherung die zwischengespeicherten Daten an den Server 9 zu übertragen. Beispielsweise kann die Übertragung der gesammelten Daten in Form von Paketen erfolgen. In einem Paket sind dann Daten von wenigstens einer oder mehreren Komponenten enthalten, die verschiedene Zeitstempel aufweisen bzw. zu verschiedenen Zeiten vom Steuergerät 2 erfasst wurden.

In einer weiteren Ausführungsform ist die erste Schnittstelle 3 ausgebildet, um zusätzlich zu den Daten des Steuergerätes 2 und/oder der Komponenten 14, 15 auch weitere Daten, insbesondere Steuerdaten zu übertragen. Damit ist eine effiziente Ausnutzung der Datenverbindung 4 möglich.

In einer weiteren Ausführungsform ist die erste Schnittstelle 3 ausgebildet, um sich automatisch an ein Übertragungsprotokoll einer Datenverbindung 4, insbesondere eines vorgegebenen Datenbusses anzupassen. Auf diese Weise ist es möglich, dass die erste Schnittstelle 3 Daten mit verschiedenen Servern 9 austauscht, wobei die Server 9 unterschiedliche Übertragungsprotokolle bzw. unterschiedliche Datenbusse verwendet. Zudem können in der Datenverbindung 4 zwischen dem Server 9 und der ersten Schnittstelle 3 unterschiedliche Übertragungsgeräte wie z.B. ein Hub mit verschiedenen Datenprotokollen vorgesehen sein. Weiterhin kann die erste Schnittstelle 3 Daten mit verschiedenen Servern austauschen, die unterschiedliche Übertragungsprotokolle verwenden. Für die automatische Anpassung der ersten Schnittstelle 3 an verschiedene Übertragungsprotokolle sind im ersten Datenspeicher 10 entsprechende Daten und/oder Programme angelegt, mit denen eine Anpassung der ersten Schnittstelle 3 an verschiedene Übertragungsprotokolle möglich ist.

In einer weiteren Ausbildung kann die erste Schnittstelle 3 ausgebildet sein, um über eine Datenverbindung 4, insbesondere über eine Internetverbindung, sich Daten und Programme zu holen, mit denen eine Anpassung an ein neues Datenprotokoll möglich ist. Dazu sind ebenfalls entsprechende Programme im ersten Datenspeicher 10 abgelegt. Weiterhin kann die erste Schnittstelle 3 ausgebildet sein, um über eine Datenverbindung 4 ein automatisches Programmupdate auszuführen. Zudem kann das Programmupdate auch für ein Programm des Steuergeräts 2 vorgesehen sein. In dieser Ausführungsform ist das Steuergerät 2 ausgebildet, um über die erste Schnittstelle 3 über eine Datenverbindung 4 ein automatisches Programmupdate auszuführen.

In einer Ausführungsform ist der erste Datenspeicher 10 in einen ersten und einen zweiten Bereich unterteilt. Die zwei Bereiche werden dazu verwendet, um wechselweise in einem der zwei Bereiche ein aktuelles Programm für das Steuergerät 2 und/oder die erste Schnittstelle 3 bereitzuhalten. Der zweite Bereich ist dazu vorgesehen, um eine neue Version des Programmes des ersten Bereiches abzuspeichern. Nach einer vollständigen Abspeicherung des neuen Programmes im zweiten Bereich verwenden das Steuergerät 2 und/oder die erste Schnittstelle 3 das neue Programm des zweiten Bereiches. Anschließend steht der erste Bereich des ersten Datenspeichers 10 zur Verfügung, um eine neue Version des Programmes abzuspeichern. Somit ist es auf einfache Weise möglich, ein Programm zur Ausführung bereitzuhalten und zugleich eine neue Version des Programmes abzuspeichern.

In einer weiteren Ausführungsform ist die erste Schnittstelle 3 ausgebildet, um über einen M-Bus eine Verbindung mit einer Komponente 11,12,14,15 der Heizungsanlage 1 oder dem Server 9 aufzubauen. Insbesondere kann der M-Bus auch zwischen dem Steuergerät 2 und den Komponenten 11,12,14,15 direkt ausgebildet sein. Abhängig von der gewählten Ausführungsform kann das Thermostatventil 11 auch direkt über eine Datenverbindung 4 mit der Eingabe-/Ausgabeeinheit 12 verbunden sein. Zudem kann die erste Schnittstelle 3 in Form eines Gateways ausgebildet sein, das die Daten vom EMS-Busstandard auf einen Funkstandard umwandelt und an die Komponenten in Form des Thermostatventils 11 und/oder der Eingabe-/Ausgabeeinheit 12 und/oder an den Server 9 übermittelt. Auf diese Weise kann ein Standard etabliert werden, auf dessen Basis Daten zwischen einer Komponente, beispielsweise einer Eingabe-/Ausgabeeinheit 12 und einem Steuergerät 2 der Heizungsanlage 1, ausgetauscht werden können. Dazu weisen die Komponenten 14, 15 und das Thermostatventil 11 und die Eingabe-/Ausgabeeinheit 12 auch jeweils eine entsprechende weitere Schnittstelle 17 auf, die zum Anbinden an einen M-Bus ausgebildet sind. Die weiteren Schnittstellen 17 können entsprechend der ersten Schnittstelle 3 ausgebildet sein. Somit kann der M-Bus auch für einen Datenaustausch und/oder zur Steuerung der Heizungsanlage verwendet werden. Die Datenverbindung kann beispielsweise zur Verbrauchsoptimierung der Heizungsanlage verwendet werden. Diese Vorgehensweise bietet den Vorteil, dass beispielsweise bestehende M-Busse zusätzlich für die Heizungsanlage verwendet werden können. Insbesondere kann eine Einbindung einer Tarifinformation für den Verbrauch der Heizungsanlage vorgesehen sein, um die Komponenten und/oder die Heizungsanlage entsprechend der Tarifinformation zu steuern.

Eine Grundidee der automatischen Anpassung der ersten Schnittstelle an verschiedene Datenprotokolle besteht darin, ein Plug-and-Play-System für eine Heizungsanlage bereitzustellen, bei dem die erste Schnittstelle beispielsweise in Form eines Gateways an einen beliebigen Bus der Heizungsanlage angeschlossen werden kann. Die erste Schnittstelle ist in der Weise ausgebildet, dass die erste Schnittstelle automatisch die Art des Datenbusses, insbesondere das vom Datenbus verwendete Datenformat und das verwendete Übertragungsprotokoll erkennt, und sich automatisch an das Datenformat und das Übertragungsprotokoll anpassen kann. Der erste Datenspeicher 10 kann beispielsweise in Form eines Flashspeichers ausgebildet sein.

Abhängig von der gewählten Ausführungsform können im ersten Datenspeicher 10 für die Daten der Komponenten jeweils die aktuellen Daten und/oder auch die zeitlich vorhergehenden Daten abgespeichert sein. Zudem kann von der ersten Schnittstelle 3 und von der zweiten Schnittstelle 6 eine Verschlüsselung der übermittelten Daten bzw. eine Entschlüsselung der übermittelten Daten durchgeführt werden. Mithilfe des beschriebenen Verfahrens ist sowohl auf der Seite der Heizungsanlage 1, d.h. dem ersten Datenspeicher 10 als auch auf der Seite des Servers 9, d.h. dem zweiten Datenspeicher 8 ein Abbild der aktuellen Daten der Komponenten und vorzugsweise der vorhergehenden Daten der Komponenten abgelegt. Die Daten können beispielsweise in Form von binären Zahlen übermittelt werden und auf der Seite des Servers in Werte von Parametern umgewandelt werden. Dadurch ist eine bessere Lesbarkeit bzw. Überprüfbarkeit der Daten auf der Seite des Servers gegeben.

Die Daten der Komponenten und/oder des Steuergerätes 2 können von der Recheneinheit 7 analysiert und ausgewertet werden. Beispielsweise kann die Funktionsweise des Steuergerätes 2 und/oder der Komponenten 11,12,14,15 der Heizungsanlage 1 mithilfe der Analyse der abgespeicherten Daten überprüft werden. Beispielsweise kann ein zeitlicher Verlauf eines Wertes eines Datentyps einer Komponente 11,12,14,15 mit einer Schwelle oder einem Vergleichswert verglichen werden. Ergibt die Überprüfung, dass der zeitliche Verlauf des Datums des Datentyps der Komponente über oder unter einer Schwelle bzw. einem Vergleichsverhalten liegt, so wird eine Fehlfunktion der Komponente erkannt.

Der Datenspeicher 8 stellt eine Datenbank dar, in der präzise abgespeichert ist, welche Komponenten tatsächlich in welcher Heizungsanlage 1 oder weiteren Heizungsanlage 13 eingebaut sind. Aufgrund der Daten, der Datentypen und/oder der Kennungen für die Komponenten, die im zweiten Datenspeicher 8 abgelegt sind, kann durch Nachsehen im Datenspeicher 8 geklärt werden, welche Komponenten tatsächlich in der Heizungsanlage 1 und/oder der weiteren Heizungsanlage 13 vorhanden sind. Diese Information kann beispielsweise für eine Wartung und/oder eine Reparatur der Heizungsanlagen 1,13 verwendet werden. Dazu kann der Server 9 die Information, welche Komponente in welcher Heizungsanlage 1,13 vorhanden ist, über die zweite Schnittstelle 6 an eine weitere Recheneinheit, insbesondere eine Recheneinheit eines Reparaturservice übermitteln. Durch den regelmäßigen Abgleich der geänderten Daten mit dem Datenspeicher 8 sind die Daten des Datenspeichers 8 immer aktuell. Auf diese Weise kann bei einer Fehlfunktion der Komponente oder der Heizungsanlage 1 bzw. der weiteren Heizungsanlage 13 präzise die Komponente zur Reparatur mitgenommen werden, die ausgetauscht werden muss.

Die weitere Heizungsanlage 13 ist beispielsweise identisch zur Heizungsanlage 1 aufgebaut und weist ebenfalls ein Steuergerät, einen Datenspeicher, eine Schnittstelle und entsprechende Komponenten auf. Die weitere Heizungsanlage 13 übermittelt wie die Heizungsanlage 1 Daten für das Steuergerät und/oder die Komponenten der Heizungsanlage und übermittelt die Daten an den Server 9. Zudem kann das Steuergerät der weiteren Heizungsanlage 13 Daten mit den Komponenten der weiteren Heizungsanlage 13 austauschen. Dabei können die gleichen Datentypen, Komponenten und die gleichen Verfahren verwendet werden, wie für die Heizungsanlage 1 beschrieben wurde.

## Patentansprüche

1. Heizungssteuergerät (2) für eine Heizungsanlage (1), mit einer Schnittstelle (3), wobei die Schnittstelle (3) ausgebildet ist, um Daten von einem Übertragungsprotokoll des Heizungssteuergerätes (2) in ein Übertragungsprotokoll eines weiteren Gerätes (9) umzuwandeln und die Daten an das weitere Gerät (9) zu übermitteln.

2. Heizungssteuergerät nach Anspruch 1, wobei die Schnittstelle (3) ausgebildet ist, um an das Gerät (9) nur Daten zu übertragen, die sich ändern, wobei die Schnittstelle (3) insbesondere ausgebildet ist, einmalig alle Daten zu übertragen.

3. Heizungssteuergerät nach Anspruch 2, wobei die geänderten Daten mit einem Zeitstempel versehen sind, und wobei die Schnittstelle (3) ausgebildet ist, um die geänderten Daten mit dem Zeitstempel zu übertragen.

4. Heizungssteuergerät nach einem der Ansprüche 2 oder 3, wobei das Heizungssteuergerät ausgebildet ist, um bei einer fehlenden Datenverbindung zu dem Gerät (9) die geänderten Daten zwischenzuspeichern und nach Aufbau einer Datenverbindung in einem Paket mehrere gespeicherte Daten zu übertragen.

5. Heizungssteuergerät nach einem der Ansprüche 1 bis 4, wobei die Schnittstelle (3) ausgebildet ist, um zusätzlich zu den Daten Steuerdaten zu übertragen.

6. Heizungssteuergerät nach einem der vorhergehenden Ansprüche 1 bis 5, wobei das Heizungssteuergerät mit mehreren Komponenten (11, 12, 14. 15) der Heizungsanlage (1) verbunden ist, und wobei das Heizungssteuergerät (2) ausgebildet ist, um die Daten der Komponenten (11, 12, 14, 15) mit Kennungen der Komponenten (11, 12, 14, 15) zu versehen und über die Schnittstelle (3) die Daten mit den Kennungen zu übertragen.

7. Heizungssteuergerät nach einem der vorhergehenden Ansprüche, wobei die Schnittstelle (3) ausgebildet ist, um die Daten drahtlos zu übertragen.

8. Heizungssteuergerät nach einem der vorhergehenden Ansprüche, wobei die Schnittstelle (3) ausgebildet ist, um sich automatisch an ein Übertragungsprotokoll eines Datenbusses anzupassen.

9. Heizungssteuergerät nach Anspruch 8, wobei die Schnittstelle (3) mit einem Datenspeicher (10) verbunden ist, wobei im Datenspeicher (10) Daten und/oder Programme abgelegt sind, mit denen eine Anpassung der Schnittstelle (3) an das Übertragungsprotokoll des Datenbusses möglich ist.

10. Heizungssteuergerät nach Anspruch 8, wobei die Schnittstelle ausgebildet ist, um sich mit einer Datenquelle über eine Internetverbindung (4) zu verbinden, und um Informationen zum Verbinden mit dem Übertragungsprotokoll des Datenbusses von der Datenquelle (9) zu holen.

11. Heizungssteuergerät nach einem der vorhergehenden Ansprüche, wobei die Schnittstelle ausgebildet ist, um eine Datenverbindung mit einer Datenquelle (9) insbesondere über eine Internetverbindung aufzubauen, um ein automatisches Programmupdate auszuführen.

12. Heizungssteuergerät nach Anspruch 11, wobei das Heizungssteuergerät (2) mit einem Datenspeicher (10) verbunden ist, wobei der Datenspeicher (10) in zwei Bereiche unterteilt ist, wobei im ersten Bereich ein Programm abgespeichert ist, das vom Heizungssteuergerät (2) verwendet wird, wobei das Heizungssteuergerät (2) im zweiten Bereich eine neue Version des Programmes abzuspeichern, und wobei nach einem vollständigen Abspeichern der neuen Version des Programmes das Heizungssteuergerät (2) das Programm des zweiten Bereiches anstelle des Programms des ersten Bereiches verwendet, und wobei das Heizungssteuergerät anschließend eine folgende neue Version des Programmes in dem ersten Bereich abgespeichert.

13. Heizungssteuergerät nach einem der vorhergehenden Ansprüche, wobei die Schnittstelle (3) ausgebildet ist, um über einen M-Bus eine Verbindung mit einer Komponente (11, 12, 14, 15) einer Heizungsanlage aufzubauen, wobei insbesondere über den M-Bus Daten mit der Komponente ausgetauscht werden, um einen Energieverbrauch der Heizungsanlage zu reduzieren.

14. Heizungssteuergerät nach einem der vorhergehenden Ansprüche, wobei das Gerät in Form einer Heizungskomponente (11, 12, 14, 15), insbesondere in Form eines Thermostatventils (11) oder in Form einer Eingabe-/Ausgabeeinheit (12) ausgebildet ist.

15. Server (9), der ausgebildet ist, um Daten von einem Heizungssteuergerät (2) nach einem der vorhergehenden Ansprüche zu empfangen, wobei der Server (9) ausgebildet ist, um Daten von mehreren Heizungssteuergeräten (2) zu sammeln.

16. Server nach Anspruch 15, wobei der Server (9) ausgebildet ist, um Daten mit Kennungen für verschiedene Komponenten und/oder Heizungssteuergeräte zu empfangen und die Daten mit den Kennungen in einem Datenspeicher (8) abzuspeichern.

17. Server nach einem der Ansprüche 15 oder 16, wobei der Server (9) ausgebildet ist, um anhand der Daten eine Fehlfunktion der Komponente (11, 12, 14, 15) oder des Heizungssteuergerätes (2) zu überprüfen.

18. Verfahren zum Betreiben einer Heizungsanlage (1) mit einem Heizungssteuergerät (2) mit einer Schnittstelle (3), wobei über die Schnittstelle (3) Daten von einem Übertragungsprotokoll des Heizungssteuergerätes (2) in ein Übertragungsprotokoll eines weiteren Gerätes (9) umgewandelt werden und die Daten an ein weiteres Gerät (9) übermittelt werden.

19. Verfahren nach Anspruch 18, wobei an das Gerät (9) nur Daten übertragen werden, die sich ändern.

20. Verfahren Anspruch 19, wobei die geänderten Daten mit einem Zeitstempel versehen werden, und wobei die geänderten Daten mit dem Zeitstempel übertragen werden.

21. Verfahren einem der Ansprüche 19 oder 20, wobei bei einer fehlenden Datenverbindung (4) zu dem Gerät (9) die geänderten Daten zwischengespeichert werden und nach Aufbau einer Datenverbindung (4) in einem Paket mehrere Daten übertragen werden.

22. Verfahren nach einem der vorhergehenden Ansprüche 18 bis 21, wobei von dem Heizungssteuergerät (2) Daten von mehreren Komponenten (11, 12, 14, 15) der Heizungsanlage (1) empfangen werden, und wobei die Daten der Komponenten mit Kennungen der Komponenten über die Schnittstelle (3) übertragen werden.
